(19)

(11) **EP 2 924 406 B1**

(12) **EUROPEAN PATENT SPECIFICATION**

(45) Date of publication and mention of the grant of the patent: **20.12.2017 Bulletin 2017/51**

(21) Application number: **12888879.9**

(22) Date of filing: **21.11.2012**

(51) Int Cl.:
*G01L 1/14* (2006.01) *G01L 1/20* (2006.01)
*G01L 5/00* (2006.01) *G01L 5/22* (2006.01)

(86) International application number: **PCT/JP2012/080151**

(87) International publication number: **WO 2014/080467 (30.05.2014 Gazette 2014/22)**

(54) **LOAD SENSOR**

LASTSENSOR

CAPTEUR DE CHARGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application: **30.09.2015 Bulletin 2015/40**

(73) Proprietor: **Sumitomo Riko Company Limited Komaki, Aichi (JP)**

(72) Inventors:
- **KAWAGUCHI Junya Komaki-shi Aichi 485-8550 (JP)**
- **YOSHIKAWA Takeaki Komaki-shi Aichi 485-8550 (JP)**
- **TAGUCHI Yutaro Komaki-shi Aichi 485-8550 (JP)**
- **KOBAYASHI Jun Komaki-shi Aichi 485-8550 (JP)**
- **YOSHIKAWA Hitoshi Komaki-shi Aichi 485-8550 (JP)**

(74) Representative: **Müller-Boré & Partner Patentanwälte PartG mbB Friedenheimer Brücke 21 80639 München (DE)**

(56) References cited:
**EP-A2- 1 377 141**
**WO-A1-2012/050128**
**JP-A- 2005 317 638**
**JP-A- 2005 317 638**
**JP-A- 2010 043 881**
**JP-A- 2010 212 616**
**JP-A- 2012 117 892**
**JP-A- 2012 163 348**
**JP-A- 2012 163 348**
**JP-U- H 069 167**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 924 406 B1

Printed by Jouve, 75001 PARIS (FR)

## Description

The present invention relates to a flexible load sensor that includes a sensor portion and wiring portions that are stretchable and contractible, and more particularly relates to a structure of the wiring portions.

For example, Patent Document 1 discloses a capacitance type sensor in which front-side electrodes and back-side electrodes are placed with a stretchable and contractible dielectric layer interposed therebetween. A plurality of detection portions are provided between the front-side electrodes and the back-side electrodes, the front-side electrodes and the back-side electrodes facing each other in the front-back direction. Applying a load to the capacitance type sensor reduces the thickness of a part of the detection portions subjected to the load, that is, the distance between front-side electrodes and back-side electrodes corresponding to the part, whereby capacitance of the detection portions increases. In this manner, the capacitance type sensor can detect a load distribution based on the change in the capacitance.

In the flexible capacitance type sensor described in Patent Document 1, so as not to restrict elastic deformation of the dielectric layer caused by the load, the front-side and the back-side electrodes (hereafter, collectively called the "electrodes" where appropriate) and wiring for electrically connecting the electrodes to a measuring circuit are made of conductive material having an elastomer as a base material.

[Patent Document 1] Japanese Patent Application Publication No. 2011-75322 (JP 2011-75322 A)
[Patent Document 2] Japanese Patent Application Publication No. 2005-317638 (JP 2005-317638 A)
[Patent Document 3] Japanese Patent Application Publication No. 2004-031641 (JP 2004-031641 A)
[Patent Document 4] Japanese Patent Application Publication No. H06-194680 (JP H06-194680 A)

JP 2012 163348 A discloses a capacitive type plane sensor which comprises a dielectric layer, a plurality of front-side electrodes including a binder and a conductive carbon powder, a plurality of rear-side electrodes including a binder and a conductive carbon powder, and a plurality of detecting parts.

In order to reduce electrical resistance, silver powder is used as the conductive material of the wiring. Specifically, as described in Patent Document 1, the wiring is formed by screen-printing silver paste obtained by dispersing the silver powder in a polymer corresponding to the amount of the elastomer. In accordance with the relation between the size and the sensing area of the sensor, the wiring can only be placed in a limited space. Hence, so as to reduce the width of each wire, the silver paste needs to be printed as thin as possible (with as small a width as possible). The electrical resistance of the wiring is, however, preferably smaller. In addition, the wiring needs to have durability to endure repeated stretching and bending. Hence, the silver paste is printed as thick as possible.

If the capacitance type sensor is used as a seat sensor for an automobile seat or a wheelchair, a large load is likely to be locally applied. In this case, the sensor is greatly deformed, and the wiring follows the deformation to be stretched. As described above, one wire has a small area. The wiring contains a relatively large amount of the silver powder to reduce the electrical resistance, so the wiring is less stretchable and contractible than the electrodes. Hence, locally applying a large load may increase the electrical resistance or break the wiring, due to the stretching thereof. Thus, to improve the durability of the wiring is an issue in the flexible sensor, but there is a limit to the thickness that can be formed by a printing method. In addition, it is difficult to keep the electrical resistance from increasing or keep the wiring from breaking by simply increasing the thickness of the wiring.

The present invention has been developed in view of the above situations, and it is an object of the present invention to provide a flexible load sensor that includes wiring portions that are stretchable and contractible and excel in durability.

(1) In order to solve the above problem, a load sensor according to claim 1 is characterized by including a stretchable and contractible sensor portion for detecting a load and a wiring portion connected to the sensor portion. In the load sensor, the wiring portion includes: a first conductive layer printed on a surface of a substrate with the ability to stretch and contract and containing an elastomer and conductive carbon powder; and a second conductive layer printed on the first conductive layer, having an area smaller than that of the first conductive layer, and containing an elastomer and metal powder.

The wiring portion includes at least a two-layer structure with the first conductive layer and the second conductive layer stacked. Each of the first conductive layer and the second conductive layer contains the elastomer as a base material, thereby being stretchable and contractible together with the substrate. The second conductive layer can be reinforced by interposing the first conductive layer containing the conductive carbon powder having a reinforcing effect between the second conductive layer corresponding to conventional wiring and the substrate. The first conductive layer contains the conductive carbon powder, and hence has an elastic modulus lower than that of the second conductive layer. By interposing the flexible first conductive layer between the substrate and the second conductive layer, the first conductive layer can absorb and reduce stresses produced during stretching and contraction. In addition, when stretched, the first conductive layer less increases in electrical resistance than the second conductive layer. Thus, if the electrical resistance of the second conductive layer increases during stretching, or if conduction is cut off by occurrence of a crack, the conduction can be ensured through the first conductive layer in contact with the second conductive layer.

For example, in the case of stacking two layers having different areas by sticking one to the other, if a small-area layer having a smaller area is formed first, a gap is likely to be formed between a large-area layer having a larger area and a side face of the small-area layer, so that stresses produced during stretching and contraction concentrate on the gap. This problem is resolved by forming the layers by a printing method. However, if the small-area layer is formed first by the printing method, a problem occurs in which the large-area layer printed later is thinned at a portion in contact with an edge of the small-area layer. This problem makes it difficult to provide a sufficient reinforcing effect by stacking the layers.

In this respect, with the wiring portion of the present invention, the substrate, the first conductive layer (large area), and the second conductive layer (small area) are stacked in this order. In other words, the large-area layer is formed, and then, the small-area layer is formed. This order prevents the above-described problem from occurring regardless of whether the layers are stuck or printed. As a result, the reinforcing effect by the stacking can sufficiently be provided. As has been described above, according to the present invention, durability of the wiring portion is improved. Consequently, the load sensor of the present invention excels in durability.

Patent Document 2 discloses a wiring board that includes an insulating substrate, a carbon circuit printed on the insulating substrate, and a wiring circuit of silver paste printed on the carbon circuit. However, Patent Document 2 describes the wiring board, such as a printed wiring board or a mounting circuit substrate. Unlike the load sensor, these types of wiring boards need not be stretchable or contractible. Hence, the carbon circuit and the wiring board naturally need not be stretchable or contractible. The carbon circuit only plays a role of inhibiting the migration of silver wiring. In Patent Document 2, durability of the silver wiring against stretching and bending is not considered as an issue. Patent Documents 3 and 4 disclose conductive layers each having a two-layer structure of carbon paste and silver paste. Neither of the conductive layers, however, needs to be stretchable and contractible. Thus, in Patent Documents 3 and 4, durability of the silver wiring against stretching and bending is not considered as an issue.

According to the present invention, each of the first conductive layer and the second conductive layer is formed by a printing method.

The printing method allows easy formation of the first and the second conductive layers that are long, has a thin wire shape or thin film shape, or the like. Examples of the printing method include ink jet printing, flexo printing, gravure printing, screen printing, pad printing, and lithography. The screen printing method is particularly preferable because of easiness of adjustment of the coating film thickness and high dimensional accuracy.

As described above, the area of the second conductive layer is smaller than that of the first conductive layer. As a result, employing the printing method does not cause a problem of a printing level difference that the thickness of the upper side film decreases, when a thin film having a larger area is printed over a thin film having a smaller area.

(2) Preferably, in the configuration of (1), a part of the second conductive layer is buried in the first conductive layer in the wiring portion.

With this configuration, the contact area between the first and the second conductive layers increases, thus increasing the adhesive force therebetween. As a result, even with repeated stretch and contraction, the first conductive layer is less likely to separate from the second conductive layer. The effect of reinforcing the second conductive layer by the first conductive layer also increases.

(3) Preferably, in the configuration of (1) or (2), the wiring portion is formed by applying first conductive paint for forming the first conductive layer on the surface of the substrate, and then applying second conductive paint for forming the second conductive layer on a surface of the first conductive paint in a semi-hardened state.

In this configuration, the semi-hardened state refers to a state before the applied paint is fully hardened. Applying the second conductive paint before the first conductive paint is fully hardened causes the application pressure of the second conductive paint to depress the coating film surface of the first conductive paint. Hardening the first and the second conductive paint in this state can form the wiring portion having the configuration of (2) in which a part of the second conductive layer is buried in the first conductive layer.

The area of the second conductive layer is smaller than that of the first conductive layer. For example, if the printing is performed in the reverse order to that of this configuration, that is, if the first conductive paint having a larger area is printed over the second conductive paint having a smaller area, a large amount of solvent contained in the first conductive paint covers the coating film surface of the second conductive paint in the semi-hardened state. Accordingly, polymer components and metal powder in the coating film of the second conductive paint may seep into the first conductive paint, thus leading to an uneven dispersion state of the metal powder or a change in dimensions of the second conductive layer. In contrast, in this configuration, the first conductive paint having a larger area is printed first, and then the second conductive paint having a smaller area is printed, whereby the problem due to the seeping of the second conductive paint is less likely to occur. That is, with this configuration, the second conductive layer with a good dispersion state of the metal powder can be formed at high dimensional accuracy.

(4) Preferably, in the configuration of any one of (1) to (3), the wiring portion includes a protective layer covering the first conductive layer and the second conductive layer.

Covering with the protective layer makes the first and the second conductive layers less likely to be exposed to air, whereby the metal powder of the second conductive layer is less likely to oxidize. Hence, even with a prolonged use, the conductivity of the second conductive layer is less likely to decrease. Covering with the protective layer can also ensure insulation between the wiring portions and the outside thereof. The reinforcing effect for the wiring portion can be expected. An elastomer that is stretchable and contractible is preferably employed as the material of the protective layer so as not to reduce the ability to stretch and contract of the wiring portion.

(5) Preferably, in the configuration of any one of (1) to (4), the wiring portion includes a connection end to be electrically connected to a measuring circuit, and the connection end includes a reinforcing layer set on the first conductive layer so as to cover the second conductive layer, and containing a resin and conductive carbon powder.

If the wiring portion that is stretchable and contractible is connected to a connector or the like, stresses are likely to concentrate at the connection end of the wiring portion. With this configuration, the reinforcing layer containing the conductive carbon powder having a reinforcing effect is placed at the connection end. This increases the strength of the connection end, and thus improves the durability of the wiring portion.

(6) Preferably, in the configuration of any one of (1) to (5), the sensor portion includes a dielectric layer made of a polymer; a front-side sheet member placed on a front side of the dielectric layer, and including a front-side substrate with the ability to stretch and contract and a front-side electrode that is placed on a back surface of the front-side substrate, which is on the dielectric layer side, and that contains an elastomer and conductive carbon powder; and a back-side sheet member placed on a back side of the dielectric layer, and including a back-side substrate with the ability to stretch and contract and a back-side electrode that is placed on a front surface of the back-side substrate, which is on the dielectric layer side, and that contains an elastomer and conductive carbon powder, the sensor portion being capable of detecting a load based on a change in capacitance of a detection portion formed between the front-side electrode and the back-side electrode facing each other with the dielectric layer interposed therebetween. The wiring portion preferably includes a front-side wiring portion placed on the back surface of the front-side substrate and connected to the front-side electrode, and a back-side wiring portion placed on the front surface of the back-side substrate and connected to the back-side electrode. The first conductive layer of the front-side wiring portion is formed so as to be continuous with the front-side electrode. The first conductive layer of the back-side wiring portion is formed so as to be continuous with the back-side electrode.

The load sensor with this configuration is a capacitance type sensor, and can detect a load based on a change in capacitance associated with a change in distance between the front-side electrode placed on the front-side sheet member and the back-side electrode placed on the back-side sheet member (thickness of the detection portion). Each of the first conductive layer of the front-side wiring portion and the front-side electrode contains an elastomer and conductive carbon powder. In the same manner, each of the first conductive layer of the back-side wiring portion and the back-side electrode contains an elastomer and conductive carbon powder. Hence, the first conductive layers, the front-side electrode, and the back-side electrode can be made of the same material. Specifically, the first conductive layers can easily be formed by simply extending the front-side electrode and the back-side electrode.

[FIG. 1] FIG. 1 is a transparent top view of a capacitance type sensor.
[FIG. 2] FIG. 2 is an exploded sectional view taken in the direction of line II-II in FIG. 1.
[FIG. 3] FIG. 3 is an enlarged view in box III in FIG. 1.
[FIG. 4] FIG. 4 is a sectional view taken in the direction of line IV-IV in FIG. 3.
[FIG 5] FIG. 5 is a sectional view taken in the direction of line V-V in FIG. 3.
[FIG. 6] FIGS. 6A to 6D are sectional views showing forming steps of a wiring portion; FIG. 6A shows a first conductive paint printing step; FIG. 6B shows a second conductive paint printing step; FIG. 6C shows a protective layer paint printing step; and FIG. 6D shows a reinforcing layer paint printing step.

[Description of the Reference Numerals]

1: Capacitance type sensor (load sensor), 10: Sensor portion, 11: Dielectric layer, 12: Fused portion, 20: Front-side sheet member, 21: Front-side substrate, 30: Back-side sheet member, 31: Back-side substrate, 32: First conductive layer, 33: Second conductive layer, 34: Protective layer, 35: Reinforcing layer, 320: Recessed portion, 321: First conductive paint, 330: Terminal portion, 331: Second conductive paint, 341: Protective layer paint, 351: Reinforcing layer paint, 01X to 08X: Front-side electrodes, 01Y to 08Y: Back-side electrodes, 01x to 08x: Front-side wiring portions, 200x: Connection end, 01y to 08y: Back-side wiring portions, 300y: Connection end, A0101 to A0808: Detection portions

An embodiment of a load sensor of the present invention will be described below.

[Configuration of Capacitance Type Sensor]

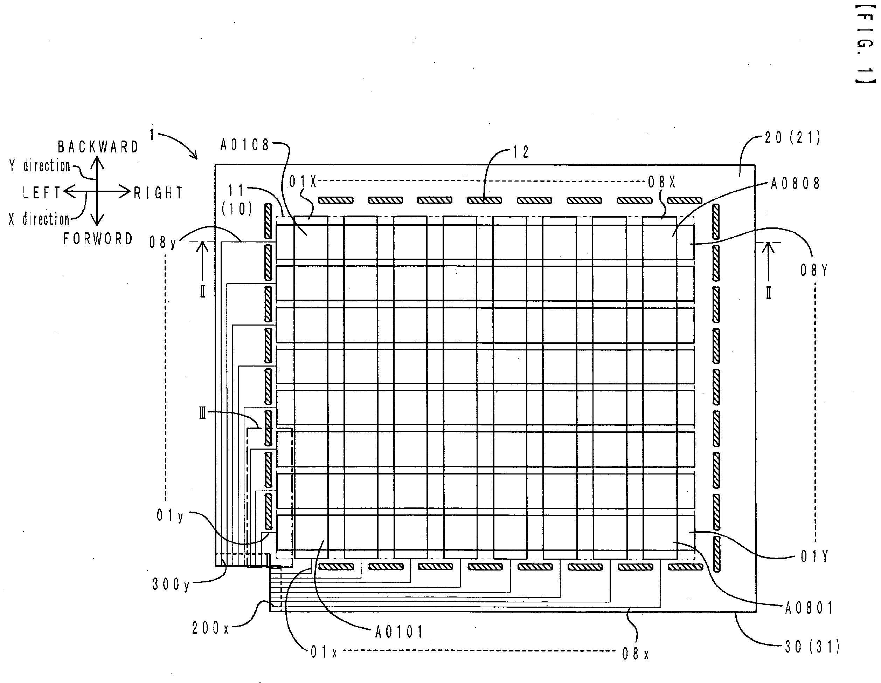

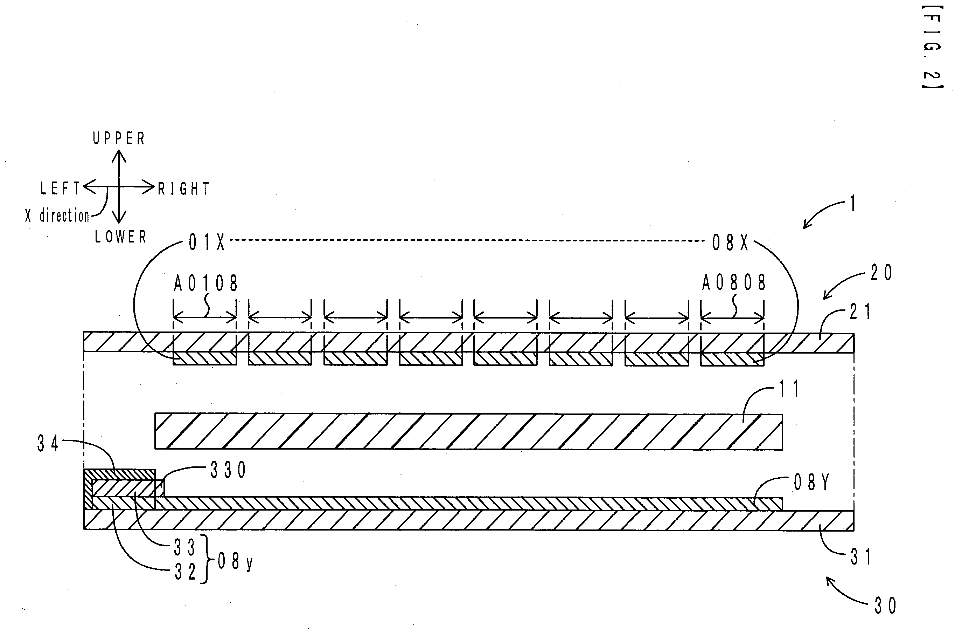

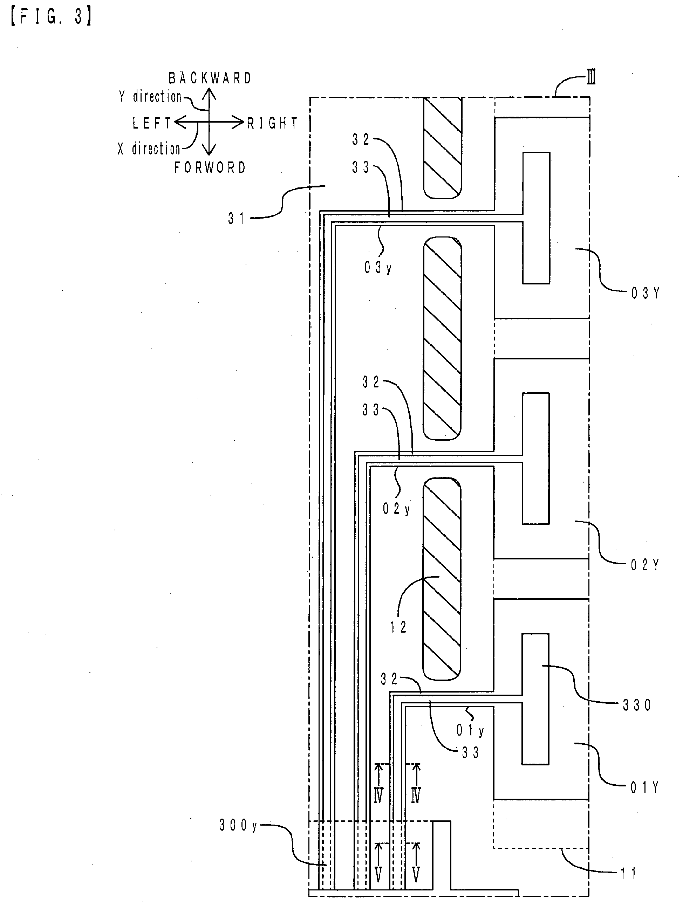

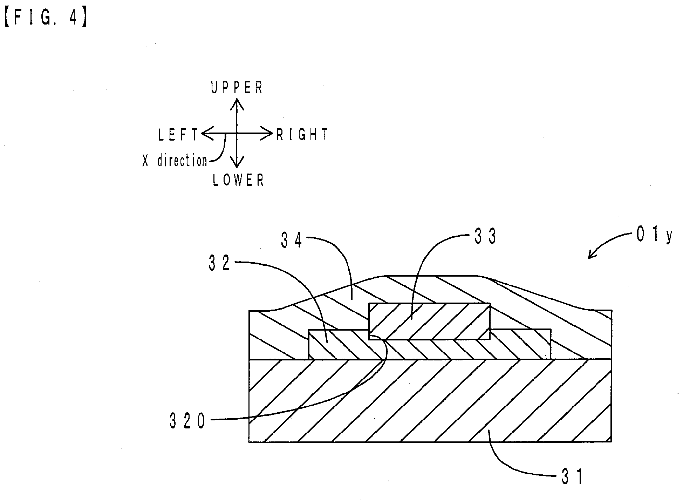

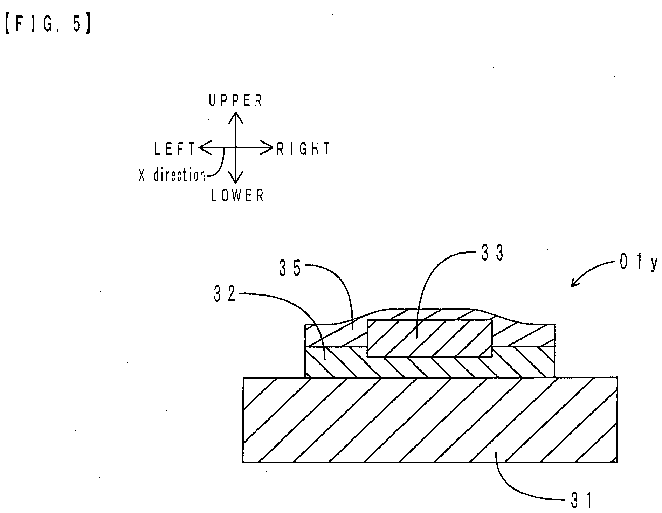

First, the configuration of a capacitance type sensor that is an embodiment of the present invention will be described. FIG. 1 shows a transparent top view of the capacitance type sensor of the present embodiment. FIG. 2 shows an exploded sectional view taken in the direction of line II-II in FIG. 1. FIG. 3 shows an enlarged view in box III in FIG. 1. FIG. 4 shows a sectional view taken in the direction of line IV-IV in FIG. 3. FIG. 5 shows a sectional view taken in the direction of line V-V in FIG. 3. FIG. 1 shows, in a transparent manner, members that are stacked in the upper-lower direction (thickness direction). FIGS. 1 and 3 do not show a protective layer.

As shown in FIGS. 1 and 2, the capacitance type sensor 1 of the present embodiment includes a dielectric layer 11, a front-side sheet member 20, and a back-side sheet member 30. The dielectric layer 11 is made of urethane foam, and has a rectangular sheet shape. The thickness of the dielectric layer 11 is 300 $\mu$m. The dielectric layer 11 extends in the X and Y directions (right-left and forward-backward directions). The urethane foam is included in "polymers" in the present invention. The front-side and the back-side sheet members 20 and 30 are stacked with the dielectric layer 11 interposed therebetween. In the capacitance type sensor 1, a sensor portion 10 corresponds to a region in which the front-side and the back-side sheet members 20 and 30 are stacked with the dielectric layer 11 interposed therebetween.

The back-side sheet member 30 is placed on the lower side (back side) of the dielectric layer 11. The back-side sheet member 30 has a back-side substrate 31, back-side electrodes 01Y to 08Y, and back-side wiring portions 01y to 08y. The back-side substrate 31 is made of polyethylene terephthalate (PET), and has a rectangular shape.

A total of eight back-side electrodes 01Y to 08Y are formed on the upper surface (front surface) of the back-side substrate 31. Each of the back-side electrodes 01Y to 08Y has a strip shape. Each of the back-side electrodes 01Y to 08Y extends in the X direction (right-left direction). The back-side electrodes 01Y to 08Y are arranged at predetermined intervals in the Y direction (forward-backward direction) so as to be substantially parallel to each other. Each of the back-side electrodes 01Y to 08Y contains acrylic rubber, carbon black, and carbon nanotube. Terminal portions 330 are arranged on the upper surfaces at the respective left ends of the back-side electrodes 01Y to 08Y. Each of the terminal portions 330 has a rectangular shape. A part of the terminal portion 330 extends leftward, and is connected to a second conductive layer 33 of a corresponding one of the back-side wiring portions 01y to 08y. The terminal portion 330 is made of the same conductive material as that of the second conductive layer 33, and contains urethane rubber and silver powder.

A total of eight back-side wiring portions 01y to 08y are formed on the upper surface of the back-side substrate 31. Each of the back-side wiring portions 01y to 08y has a linear shape. The back-side wiring portions 01y to 08y are connected to the left ends of the back-side electrodes 01Y to 08Y, respectively. As shown in the partially enlarged view in FIG. 3 and in the sectional view of the back-side wiring portion 01y in FIG. 4, each of the back-side wiring portions 01y to 08y has a first conductive layer 32, the second conductive layer 33, and a protective layer 34, except at a corresponding one of connection ends 300y.

The first conductive layer 32 is placed on the upper surface of the back-side substrate 31. The first conductive layer 32 is made of the same conductive material as that of the back-side electrodes 01Y to 08Y, and contains acrylic rubber, carbon black, and carbon nanotube. The first conductive layer 32 is formed so as to be continuous with a corresponding one of the back-side electrodes 01Y to 08Y. The first conductive layer 32 has a width of 4 mm and a thickness of 10 $\mu$m. The surface roughness of the upper surface of the first conductive layer 32 is 1.98 $\mu$m. The volume resistivity at no elongation of the first conductive layer 32 is $2.0 \times 10^{-1}$ $\Omega$·cm, and the volume resistivity at 50% elongation thereof is $7.0 \times 10^{-1}$ $\Omega$·cm. The elastic modulus of the conductive material constituting the first conductive layer 32 is 20 MPa. The upper surface of the first conductive layer 32 has a recessed portion 320 extending in the longitudinal direction thereof.

The second conductive layer 33 is set on the upper surface of the first conductive layer 32. The lower part of the second conductive layer 33 is placed in the recessed portion 320 of the first conductive layer 32. The second conductive layer 33 contains urethane rubber and silver powder. The width of the second conductive layer 33 is 1 mm, which is smaller than the width of the first conductive layer 32. The thickness of the second conductive layer 33 is 50 $\mu$m. The volume resistivity of the second conductive layer 33 is $6.7 \times 10^{-5}$ $\Omega$.cm, and the volume resistivity at 50% elongation thereof is $2.0 \times 10^{-3}$ $\Omega$·cm. The elastic modulus of the conductive material constituting the second conductive layer 33 is 100 MPa. The second conductive layer 33 is formed so as to be continuous with a corresponding one of the terminal portions 330 of the back-side electrodes 01Y to 08Y.

The protective layer 34 is placed on the upper surface of the back-side substrate 31 so as to cover the first conductive layer 32 and the second conductive layer 33. The protective layer 34 is made of silicone rubber.

The connection ends 300y are placed at the forward ends of the respective back-side wiring portions 01y to 08y, and are to be electrically connected to a measuring circuit (not shown). As shown in the sectional view of the back-side wiring portion 01y in FIG. 5, each of the connection ends 300y has the first conductive layer 32, the second conductive layer 33, and a reinforcing layer 35. The reinforcing layer 35 is set on the upper surface of the first conductive layer 32 so as to cover the second conductive layer 33. The second conductive layer 33 is interposed between the first conductive layer 32 and the reinforcing layer 35. The reinforcing layer 35 contains a polyester resin and carbon black.

The front-side sheet member 20 is placed on the upper side (front side) of the dielectric layer 11. The front-side sheet member 20 has a front-side substrate 21, front-side electrodes 01X to 08X, and front-side wiring portions 01x to 08x. The front-side substrate 21 is made of PET, and has the same rectangular shape as that of the back-side substrate 31.

A total of eight front-side electrodes 01X to 08X are formed on the lower surface (back surface) of the front-side substrate 21. Each of the front-side electrodes 01X to 08X has a strip shape. Each of the front-side electrodes 01X to 08X extends in the Y direction (forward-backward direction). The front-side electrodes 01X to 08X are arranged at predetermined intervals in the X direction (right-left direction) so as to be substantially parallel to each other. Each of the front-side electrodes 01X to 08X contains acrylic rubber, carbon black, and carbon nanotube. Similar to the back-side electrodes 01Y to 08Y, terminal portions are arranged on the lower surfaces at the respective forward ends of the front-side electrodes 01X to 08X. Parts of the terminal portions extend forward, and are connected to second conductive layers of the front-side wiring portions 01x to 08x, which is described later.

A total of eight front-side wiring portions 01x to 08x are formed on the lower surface of the front-side substrate 21. Each of the front-side wiring portions 01x to 08x has a linear shape. The front-side wiring portions 01x to 08x are connected to the forward ends of the front-side electrodes 01X to 08X, respectively. The configuration of the front-side wiring portions 01x to 08x is the same as the configuration of the back-side wiring portions 01y to 08y, and is therefore briefly described below.

Each of the front-side wiring portions 01x to 08x has a first conductive layer, a second conductive layer, and a protective layer, except at a corresponding one of connection ends 200x. The first conductive layer is placed on the lower surface of the front-side substrate 21. The first conductive layer is made of the same conductive material as that of the front-side electrodes 01X to 08X, and is formed so as to be continuous with a corresponding one of the front-side electrodes 01X to 08X. The lower surface of the first conductive layer has a recessed portion extending in the longitudinal direction thereof. The second conductive layer is set on the lower surface of the first conductive layer. The upper part of the second conductive layer is placed in the recessed portion of the first conductive layer. The width of the second conductive layer is smaller than that of the first conductive layer. The second conductive layer is formed so as to be continuous with a corresponding one of the terminal portions of the front-side electrodes 01X to 08X. The protective layer is placed on the lower surface of the front-side substrate 21 so as to cover the first conductive layer and the second conductive layer.

The connection ends 200x are placed at the respective left ends of the front-side wiring portions 01x to 08x, and are to be electrically connected to the measuring circuit (not shown). Each of the connection ends 200x has the first conductive layer, the second conductive layer, and a reinforcing layer. The reinforcing layer is set on the lower surface of the first conductive layer so as to cover the second conductive layer. The second conductive layer is interposed between the first conductive layer and the reinforcing layer.

As shown by hatched regions in FIG. 1, a plurality of fused portions 12 are arranged at peripheral edge portions of the front-side sheet member 20 and the back-side sheet member 30. The fused portions 12 are arranged in a dotted line pattern so as to surround the dielectric layer 11. The front-side sheet member 20 and the back-side sheet member 30 are bonded together at the fused portions 12.

Detection portions A0101 to A0808 are arranged at intersecting portions (overlapping portions) between the front-side electrodes 01X to 08X and the back-side electrodes 01Y to 08Y as viewed in the upper-lower direction. Each of the detection portions A0101 to A0808 includes a part of a corresponding one of the front-side electrodes 01X to 08X, a part of a corresponding one of the back-side electrodes 01Y to 08Y, and a part of the dielectric layer 11. A total of 64 (eight by eight) detection portions A0101 to A0808 are arranged. The detection portions A0101 to A0808 are arranged at substantially regular intervals on the substantially entire surface of the dielectric layer 11. A load distribution is detected in the sensor portion 10 surrounding the detection portions A0101 to A0808. Of the reference characters "A○○ΔΔ" for the detection portions, the first two digits "○○" correspond to the front-side electrodes 01X to 08X, and the last two digits "ΔΔ" correspond to the back-side electrodes 01Y to 08Y.

[Manufacturing Method of Capacitance Type Sensor]

A manufacturing method of the capacitance type sensor 1 will be described. The manufacturing method of the capacitance type sensor 1 has a sheet member producing step, a stacking step, and a fusing step.

In the sheet member producing step, the front-side electrodes 01X to 08X and the front-side wiring portions 01x to 08x are formed on the front-side substrate 21 to produce the front-side sheet member 20. In the same manner, the back-side electrodes 01Y to 08Y and the back-side wiring portions 01y to 08y are formed on the back-side substrate 31 to produce the back-side sheet member 30.

First, the following four types of paint are prepared.

(1) First conductive paint to be used to form the first conductive layers of the front-side electrodes 01X to 08X, the back-side electrodes O1Y to 08Y, the front-side wiring portions 01x to 08x, and the back-side wiring portions 01y to 08y
(2) Second conductive paint to be used to form the second conductive layers of the front-side wiring portions 01x to 08x and the back-side wiring portions 01y to 08y
(3) Protective layer paint to be used to form the protective layer 34
(4) Reinforcing layer paint to be used to form the reinforcing layer 35

Then, the prepared four types of paint are appropriately screen-printed on the lower surface (which corresponds to the lower surface in FIG. 1, and is placed facing upward when printed) of the front-side substrate 21 and are hardened by heating so as to form the front-side electrodes 01X to 08X and the front-side wiring portions 01x to 08x. In the same manner, the prepared four types of paint are appropriately screen-printed on the upper surface of the back-side substrate 31 and are hardened by heating so as to form the back-side electrodes 01Y to 08Y and the back-side wiring portions 01y to 08y.

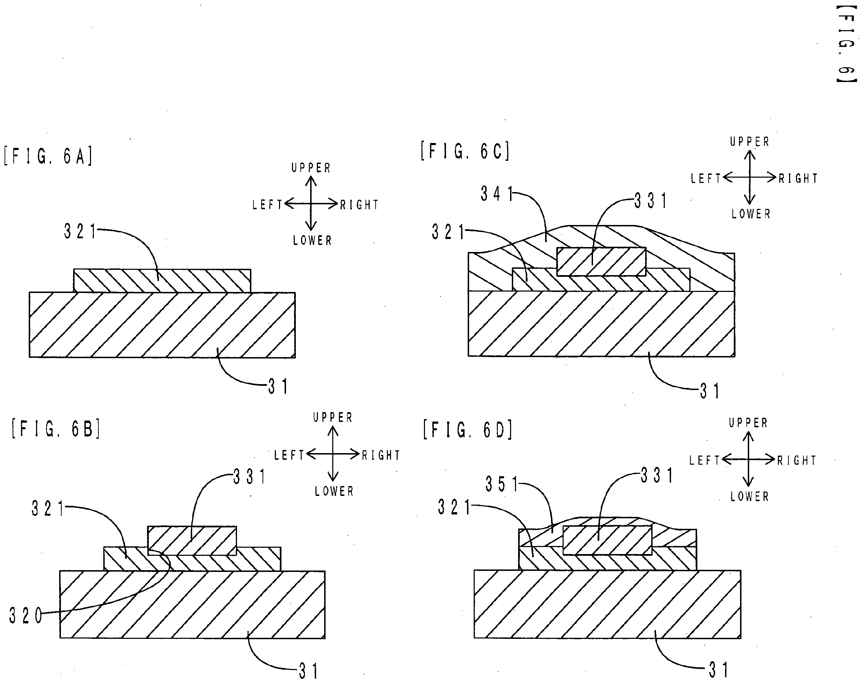

As an example, FIGS. 6A to 6D show forming steps of the back-side wiring portion 01y. As shown in FIG. 6A, first conductive paint 321 is screen-printed on the upper surface of the back-side substrate 31. Thereafter, the formed coating film of the first conductive paint 321 is preliminarily dried to be brought into a semi-hardened state. Subsequently, as shown in FIG. 6B, second conductive paint 331 is screen-printed on the upper surface of the semi-hardened coating film of the first conductive paint 321. In this process, the application pressure of the second conductive paint 331 presses the upper surface of the coating film of the semi-hardened first conductive paint 321, and thus, the recessed portion 320 is formed on the upper surface. With this process, the lower part of the coating film of the second conductive paint 331 is buried into the coating film of the first conductive paint 321. Thereafter, the formed coating film of the second conductive paint 331 is preliminarily dried to be brought into a semi-hardened state. Then, at portions other than the connection ends 300y, protective layer paint 341 is screen-printed on the upper surface of the back-side substrate 31 so as to cover the semi-hardened coating films of the first conductive paint 321 and the second conductive paint 331, as shown in FIG. 6C. At the connection ends 300y, reinforcing layer paint 351 is screen-printed on the upper surface of the coating film of the first conductive paint 321 so as to cover the semi-hardened coating film of the second conductive paint 331, as shown in FIG. 6D. Then, the formed coating film is hardened by heating so as to form the back-side wiring portion 01y. At the same time as this formation, the back-side electrode 01Y including the terminal portion 330 is formed.

In the stacking step, the back-side sheet member 30, the dielectric layer 11, and the front-side sheet member 20 are stacked in this order from the bottom. That is, the back-side sheet member 30, the dielectric layer 11, and the front-side sheet member 20 are stacked so that the dielectric layer 11 is interposed between the back-side electrodes 01Y to 08Y formed on the upper surface of the back-side substrate 31 and the front-side electrodes 01X to 08X formed on the lower surface of the front-side substrate 21.

In the fusing step, the peripheral edge portions of the front-side sheet member 20 and the back-side sheet member 30 that have been stacked are spot-fused at predetermined intervals (see the fused portions 12 in FIG. 1). The capacitance type sensor 1 of the present embodiment is thus manufactured.

[Operation of Capacitance Type Sensor]

The operation of the capacitance type sensor 1 will be described below. First, before a load is applied to the capacitance type sensor 1 (initial state), a voltage is applied to the front-side electrodes 01X to 08X and the back-side electrodes 01Y to 08Y, and capacitance C is calculated for each of the detection portions A0101 to A0808. That is, the capacitance C is calculated as if the detection portions were scanned from the detection portion A0101 to the detection portion A0808. Subsequently, after the load is applied to the capacitance type sensor 1, the capacitance C is similarly calculated for each of the detection portions A0101 to A0808. The distance between the front-side electrode and the back-side electrode is reduced in the detection portion corresponding to the part subjected to the load. The capacitance C of this detection portion therefore increases. A load for each of the detection portions A0101 to A0808 is calculated from this amount of change $\Delta C$ in the capacitance C.

[Functions and Effects]

Functions and effects of the capacitance type sensor 1 of the present embodiment will be described. In the capacitance type sensor 1 of the present embodiment, each of the back-side wiring portions 01y to 08y has the first conductive layer 32 and the second conductive layer 33. In the same manner, each of the front-side wiring portions 01x to 08x has the first conductive layer and the second conductive layer. The back-side wiring portions 01y to 08y and the front-side wiring portions 01x to 08x have the same configuration, so that the back-side wiring portions and the front-side wiring portions provide the same functions and effects. Hence, the functions and effects of the back-side wiring portions 01y to 08y will be described as a representative of both groups.

Each of the first conductive layer 32 and the second conductive layer 33 has an elastomer as a substrate, thereby being stretchable and contractible together with the back-side substrate 31. The second conductive layer 33 can be reinforced by interposing the first conductive layer 32 containing conductive carbon powder (carbon black and carbon nanotube) having a reinforcing effect between the second conductive layer 33 corresponding to conventional wiring and the back-side substrate 31. The elastic modulus of the first conductive layer 32 is smaller than the elastic modulus of the second conductive layer 33. Hence, by interposing the flexible first conductive layer 32 between the back-side substrate 31 and the second conductive layer 33, the first conductive layer 32 can absorb and reduce stresses produced during stretching and contraction. In addition, when stretched, the first conductive layer 32 less increases in electrical resistance than the second conductive layer 33. Hence, if the electrical resistance of the second conductive layer 33 increases during stretching, or if conduction is cut off by occurrence of a crack, the conduction can be ensured through the first conductive layer 32 in contact with the second conductive layer 33.

Each of the first conductive layer 32 and the second conductive layer 33 is formed by a screen printing method. The area of the second conductive layer 33 is smaller than that of the first conductive layer 32. This configuration prevents occurrence of a problem of a printing level difference such that, when a thin film having a larger area is printed over a thin film having a smaller area, the thickness of the upper side film decreases. Consequently, a reinforcing effect by lamination can sufficiently be provided. The first conductive layer 32 and the back-side electrodes 01Y to 08Y are made of the same material. Hence, the first conductive layer 32 can easily be formed by simply extending each of the back-side electrodes 01Y to 08Y.

The back-side wiring portions 01y to 08y are formed by applying the first conductive paint 321 on the upper surface of the back-side substrate 31, and applying the second conductive paint 331 before the first conductive paint 321 is fully hardened. With this process, the recessed portion 320 is formed on the upper surface of the first conductive layer 32 and the lower part of the second conductive layer 33 is buried into the recessed portion 320. As a result, the contact area between the first and the second conductive layers 32 and 33 increases, thus increasing the adhesive force therebetween. Thus, even with repeated stretch and contraction, the first conductive layer 32 is less likely to be separated from the second conductive layer 33. The effect of reinforcing the second conductive layer 33 by the first conductive layer 32 also increases. The first conductive paint 321 having a larger area is printed, and then the second conductive paint 331 having a smaller area is printed. Hence, polymer components and silver powder of the second conductive paint 331 are less likely to seep into the first conductive paint 321. As a result, the second conductive layer 33 with a good dispersion state of the silver powder can be formed at high dimensional accuracy.

The surface roughness of the upper surface of the first conductive layer 32 (face on which the second conductive layer 33 is set) is 1.98 μm. The value of the surface roughness is approximately one fifth of the thickness of the first conductive layer 32. The high surface roughness of the upper surface of the first conductive layer 32 causes a large adhesive force between the first and the second conductive layers 32 and 33 by an anchor effect. Hence, the first conductive layer 32 is less likely to be separated from the second conductive layer 33 even with repeated stretch and contraction.

Each of the back-side wiring portions 01y to 08y has the protective layer 34, except at the connection end 300y. This configuration further reinforces the back-side wiring portions 01y to 08y, and inhibits oxidation of the silver powder contained in the second conductive layer 33. Hence, the conductivity of the second conductive layer 33 is less likely to decrease after long use. The protective layer 34 has insulating properties, and can thereby ensure insulation between the back-side wiring portions 01y to 08y and the outside thereof. Each of the connection ends 300y of the back-side wiring portions 01y to 08y has the reinforcing layer 35. This configuration increases the strength of the connection ends 300y, and thus further improves the durability of the back-side wiring portions 01y to 08y.

Thus, in the capacitance type sensor 1, the front-side wiring portions 01x to 08x and the back-side wiring portions 01y to 08y have high durability. As a result, the capacitance type sensor 1 excels in durability.

<Others>

One embodiment of the load sensor of the present invention is described above. However, embodiments are not limited to the above embodiment, and various modifications and improvements can be made by those skilled in the art.

In the embodiment described above, the load sensor of the present invention is embodied as the capacitance type sensor. The sensor portion of the load sensor of the present invention is not limited to the configuration of detecting the capacitance. For example, the sensor portion may be made of a pressure-sensitive conductive elastomer or the like, the electrical resistance of which changes with pressure. Even in the case of the capacitance type sensor, the configuration thereof is not limited to that of the embodiment described above. For example, the electrodes and the wiring portions may be arranged on each of the front and the back surfaces of the dielectric layer, without including the front-side and the back-side sheet members.

An elastomer or resin can be used as the dielectric layer or the protective layer. For example, an elastomer or resin having a high specific dielectric constant is desirable to increase capacitance. Preferred examples of the elastomer include silicone rubber, acrylonitrile-butadiene copolymer rubber, acrylic rubber, epichlorohydrin rubber, chlorosulfonated polyethylene, chlorinated polyethylene, and urethane rubber. Preferred examples of the resin include polyethylene, polypropylene, polyurethane, polystyrene (including cross-linked polystyrene foam), polyvinyl chloride, a vinylidene chloride copolymer, and an ethylene-vinyl acetate copolymer. Polypropylene (modified PP) modified by polyethylene (PE) and/or ethylene-propylene rubber (EPR) may be used as polypropylene. A polymer alloy or polymer blend containing two or more kinds of these resins may be used.

Examples of the substrate on which the wiring portions are formed include: a resin film of, for example, polyimide, polyethylene, polyethylene terephthalate (PET), or polyethylene naphthalate (PEN); an elastomer sheet; and a stretch fabric. In the embodiment described above, each of the wiring portions is configured to include the protective layer or the reinforcing layer. The protective layer and the reinforcing layer are, however, not necessary.

Preferred examples of the elastomers forming the first and the second conductive layers of the wiring portions include urethane rubber, acrylic rubber, silicone rubber, ethylene-propylene copolymer rubber, natural rubber, styrene-butadiene copolymer rubber, acrylonitrile-butadiene copolymer rubber, epichlorohydrin rubber, chlorosulfonated polyethylene, and chlorinated polyethylene. The elastomers of both of the layers may be the same or different from each other.

Examples of the conductive carbon powder of the first conductive layer include carbon black, carbon nanotube, and graphite. Either one kind or a mixture of two or more kinds of the above-mentioned powder can be used. For example, the volume resistivity at no elongation of the first conductive layer is preferably $1 \times 10^1$ Ω·cm or lower. The volume resistivity at no elongation of the conductive material forming the first conductive layer may be higher than the volume resistivity at no elongation of the conductive material forming the second conductive layer. However, the difference between the volume resistivity at no elongation of the first conductive layer and the volume resistivity at no elongation of the second conductive layer is preferably equal to or less than a five-digit number.

The volume resistivity of the first conductive layer is preferably less likely to increase by stretching. For example, the volume resistivity at 50% elongation preferably changes by 10 times or less from that at no elongation. In order to increase the flexibility so as to enhance the ability to stretch and contract, the elastic modulus is preferably 50 MPa or lower. To obtain such characteristics, the type and the blending amount of the conductive carbon powder only needs to be appropriately adjusted. For example, the blending amount of the conductive carbon powder is preferably 10 parts by mass or more per 100 parts by mass of the elastomer. However, the flexibility decreases as the blending amount of the conductive carbon powder increases. Thus, the blending amount of the conductive carbon powder is preferably 100 parts by mass or less per 100 parts by mass of the elastomer.

Irregularities on the boundary face between the first and the second conductive layers increase the adhesive force between the layers. Specifically, when the surface roughness of the lamination face between the conductive layers is higher, the conductive layers are less likely to be separated with repeated stretch and contraction by the anchor effect. In addition, when the adhesive force between the stacked conductive layers is larger, the durability of the whole conductive layers is higher because the stress during stretching and contraction is transmitted not only to one of the conductive layers, but to the whole conductive layers. To obtain the adhesion improving effect by the anchor effect, for example, the surface roughness of the first conductive layer is preferably 1/200 or more of the thickness thereof. If the irregularities are too large, the stress is likely to concentrate on recessed portions (portions where the layer is thin), so that cracks may occur. Consequently, the surface roughness of the first conductive layer is preferably twice or less the thickness thereof.

The present specification employs a value calculated by the following method as the surface roughness of the first conductive layer. First, a section of a wiring portion is observed with a scanning electron microscope (SEM), and the reference line of the boundary face of the first conductive layer is determined. Then, a sum (S1) of areas of projections projecting from the reference line and a sum (S2) of areas of recesses recessed from the reference line are calculated. Then, the surface roughness is calculated by the following expression (1).

$$\text{Surface roughness} = (S1 + S2) / \text{length of reference line} \qquad (1)$$

Examples of the metal powder of the second conductive layer include silver, gold, copper, nickel, rhodium, palladium, chromium, titanium, platinum, iron, and alloys thereof. The above-mentioned powder can be used singly or in combination of two or more. Among the above, the silver powder is preferable. In order to obtain higher conductivity, the volume resistivity at no elongation of the second conductive layer is preferably $5 \times 10^{-2}$ Ω·cm or lower, and more preferably $1 \times 10^{-3}$ Ω·cm or lower.

The blending amount of the metal powder only needs to be appropriately determined so as to obtain desired volume resistivity. For example, the blending amount of the metal powder is preferably 100 parts by mass or more per 100 parts by mass of the elastomer. However, the flexibility decreases as the blending amount of the metal powder increases. Consequently, the blending amount of the metal powder is preferably 500 parts by mass or less per 100 parts by mass of the elastomer.

[Examples]

The present invention will be more specifically described by way of examples of the first conductive layer and the second conductive layer that form each of the wiring portions.

<Preparation of Second Conductive Paint A>

Second conductive paint A was prepared in the following manner. First, 100 parts by mass of a urethane rubber polymer ("Vylon (registered trademark) BX1001" manufactured by Toyobo Co., Ltd.) were dissolved in butyl carbitol acetate serving as a solvent. Four hundred parts by mass of silver powder ("Ag-XF301" manufactured by Fukuda Metal Foil & Powder Co., Ltd.) were added to this urethane rubber solution, and the solution was stirred.

<Preparation of First Conductive Paint B To D>

First conductive paint B was prepared in the following manner. First, 100 parts by mass of an acrylic rubber polymer ("Nipol (registered trademark) AR42W" manufactured by Zeon Corporation) and 0.1 part by mass of ethylenediamine serving as a cross-linking agent were mixed by a roll mill to prepare an acrylic rubber composition. Subsequently, the prepared acrylic rubber composition was dissolved in butyl carbitol acetate to prepare an acrylic rubber solution. Twenty parts by mass of carbon nanotube ("VGCF (registered trademark)" manufactured by Showa Denko K.K.) and 17 parts by mass of carbon black ("Ketjen black EC300JD" manufactured by Ketjenblack International Corporation) were added to this acrylic rubber solution, and the solution was stirred. First conductive paint C and D were prepared in the same manner as in the case of the first conductive paint B, except that the blending quantities of the carbon nanotube and the carbon black were changed.

<Measurement of Physical Properties and Surface Roughness of Conductive Layers>

The prepared conductive paint was applied by bar-coat printing to substrates (release PET films) to produce the conductive layers A to D. Then, the elastic modulus, the elongation at break, the volume resistivity at no elongation, the volume resistivity at 50% elongation, and the surface roughness of each of the conductive layers were measured. The measurement methods are given below. TABLE 1 below shows the composition and the measurement results, such as physical properties, of each of the conductive layers. In TABLE 1, the unit of the blending amount of raw materials is parts by mass.

[Elastic Modulus]

Tensile tests according to JIS K7127 (1999) were conducted, and elastic moduli were calculated from stress-elongation curves obtained by the tests. Test specimens of type 2 were used.

[Elongation at Break]

Tensile tests according to JIS K6251 (2010) were conducted, and elongations at break ($E_b$) were calculated. Test specimens of dumbbell shape No. 5 were used. The elongation rate was 100 mm/min.

[Volume Resistivity]

Volume resistivity values were measured according to the parallel terminal electrode method of JIS K6271 (2008). The distance between electrodes at no elongation was 10 mm. A commercially available silicone rubber sheet (manufactured by Kureha Elastomer Co., Ltd.) was used as a support member made of insulating resin for supporting a test specimen.

[Surface Roughness]

Surface roughness values were calculated from SEM photographs, using Expression (1) given above.

[TABLE 1]

| | | | Second conductive layer A | First conductive layer B | First conductive layer C | First conductive layer D |
|---|---|---|---|---|---|---|
| Raw materials | Elastomers | Urethane rubber | 100 | - | - | - |
| | | Acrylic rubber | - | 100 | 100 | 100 |
| | Conductive materials | Silver powder | 400 | - | - | - |
| | | Carbon nanotube | - | 20 | 11 | 23 |
| | | Carbon black | - | 17 | 9.4 | 19.6 |
| | Cross-linking agent | Ethylenediamine | - | 0.1 | 0.1 | 0.1 |
| Physical properties | Elastic modulus [MPa] | | 100 | 20 | 11 | 43 |
| | Elongation at break [%] | | 100 | 50 | 61 | 50 |
| | Volume resistivity at no elongation [Ω·cm] | | $6.7\times10^{-5}$ | $2.0\times10^{-1}$ | $1.0\times10^{0}$ | $1.0\times10^{-1}$ |
| | Volume resistivity at 50% elongation [Ω·cm] | | $2.0\times10^{-3}$ | $7.0\times10^{-1}$ | $1.8\times10^{0}$ | $6.0\times10^{-1}$ |
| Surface roughness [μm] | | | 1.10 | 1.98 | 1.87 | 2.11 |

<Production of Wiring Portion>

A first conductive layer was formed of one of the first conductive paints B to D on the upper surface of a substrate, and a conductive layer was formed of the second conductive paint A on the first conductive layer. Thus, a wiring portion including two layers was produced. A urethane elastomer sheet was used as the substrate. The size of the first conductive layer formed of one of the first conductive paints B to D was 10 mm in width, 20 mm in length, and 10 μm in thickness. The size of the second conductive layer formed of the second conductive paint A was 2 mm in width, 20 mm in length, and 25 μm in thickness. The wiring portion of each of Examples 1 to 3 is included in the wiring portions of the present invention.

[Example 1]

A wiring portion including a first conductive layer B and a second conductive layer A was produced on the upper surface of a substrate in the following manner. First, the first conductive paint B was screen-printed on the upper surface of the substrate. Then, the formed coating film of the first conductive paint B was preliminarily dried to be brought into a semi-hardened state. Then, the second conductive paint A was screen-printed on the upper surface of the semi-hardened coating film of the first conductive paint B. Lastly, the formed coating film was hardened by heating, and thus, the two conductive layers A and B were formed.

[Example 2]

Replacing the first conductive paint B in Example 1 with the first conductive paint C, a wiring portion including a first conductive layer C and the second conductive layer A was produced on the upper surface of a substrate.

[Example 3]

Replacing the first conductive paint B in Example 1 with the first conductive paint D, a wiring portion including a first conductive layer D and the second conductive layer A was produced on the upper surface of a substrate.

[Comparative Example 1]

The first conductive paint B was screen-printed on the upper surface of a substrate, and the coating film was hardened by heating to produce a wiring portion including only the first conductive paint B.

[Comparative Example 2]

The second conductive paint A was screen-printed on the upper surface of a substrate, and the coating film was hardened by heating to produce a wiring portion including only the second conductive paint A.

<Measurement of Electrical Resistance>

Terminals were arranged at both ends in the longitudinal direction of the second conductive layer on the upper side, and the electrical resistance at no elongation and the electrical resistance at 50% elongation obtained after a stretch durability test were measured. The stretch durability test was conducted in the following manner. First, both ends of a substrate with a wiring portion formed thereon were held with a pair of jig members. Then, with one of the jig members fixed, the other of the jig members was reciprocated at a speed of 50 mm/min to stretch and contract the wiring portion. The elongation rate of the wiring portion was 50%, and the number of stretch/contraction cycles was 7000. TABLE 2 shows the measurement results.

[TABLE 2]

| | Example 1 | Example 2 | Example 3 | Comparative Example 1 | Comparative Example 2 |
|---|---|---|---|---|---|
| Configuration of wiring portion | Second conductive layer A | Second conductive layer A | Second conductive layer A | - | - |
| | First conductive layer B | First conductive layer C | First conductive layer D | First conductive layer B | Second conductive layer A |
| | Substrate | Substrate | Substrate | Substrate | Substrate |
| Electrical resistance at no elongation [Ω] | $7.0\times10^{-1}$ | $5.1\times10^{-1}$ | $3.0\times10^{-1}$ | $5.0\times10^{2}$ | $8.0\times10^{-1}$ |
| Electrical resistance at 50% elongation after 7000 stretch/ contraction cycles [Ω] | $3.5\times10^{3}$ | $5.8\times10^{3}$ | $4.2\times10^{3}$ | $7.0\times10^{3}$ | $9.0\times10^{10}$ |

As shown in TABLE 2, in each of the wiring portions of Examples 1 to 3 including the first and the second conductive layers, the initial electrical resistance (at no elongation) was low, and after the stretch/contraction cycles were repeated 7000 times, the electrical resistance at 50% elongation was $10^5$ times the initial volume resistivity or less. In contrast, in the wiring portion of Comparative Example 1 including only the first conductive layer, the increase in the electrical resistance was smaller even when the wiring portion was stretched by 50% after the stretch/contraction cycles were repeated 7000 times. However, the wiring portion of Comparative Example 1 is unsuitable for wiring because of its high initial electrical resistance. In the wiring portion of Comparative Example 2 including only the second conductive layer, although the initial electrical resistance was low, the electrical resistance significantly increased when the wiring portion was stretched by 50% after the stretch/contraction cycles were repeated 7000 times.

As described above, it was verified that, in the wiring portions of the present invention including the first and the second conductive layers, the conductivity was high in the natural state and did not decrease after the stretch/contraction cycles were repeated.

The load sensor of the present invention is suitable as a flexible sensor provided, for example, in an automobile seat, a wheelchair, a mattress, or a carpet, and is also suitable for artificial skin, motion capture for detecting motion of a person, information input devices such as a keyboard, and so forth.

## Claims

**1.** A load sensor (1), comprising:

a stretchable and contractible sensor portion (10) for detecting a load; and
a wiring portion connected to the sensor portion (10), wherein
the wiring portion includes:

a first conductive-layer (32) printed on a surface of a substrate with the ability to stretch and contract and containing an elastomer and conductive carbon powder,
**characterized in that** the load sensor (1) further comprises
a second conductive layer (33) printed on the first conductive layer (32), having an area smaller than that of the first conductive layer (32), and containing an elastomer and metal powder.

**2.** The load sensor (1) according to claim 1, wherein
a part of the second conductive layer (33) is buried in the first conductive layer (32) in the wiring portion.

**3.** The load sensor (1) according to claim 1, wherein the wiring portion is formed by applying first conductive paint (321) for forming the first conductive layer (32) on the surface of the substrate, and applying second conductive paint (331) for forming the second conductive layer (33) on a surface of the first conductive paint (321) in a semi-hardened state.

4. The load sensor (1) according to any one of claims 1 to 3, wherein
the wiring portion includes a protective layer (34) covering the first conductive layer (32) and the second conductive layer (33).

5. The load sensor (1) according to any one of claims 1 to 4, wherein
the wiring portion includes a connection end (200x, 300y) to be electrically connected to a measuring circuit, and the connection end (200x, 300y) includes a reinforcing layer (35) set on the first conductive layer (32) so as to cover the second conductive layer (33), and containing a resin and conductive carbon powder.

6. The load sensor (1) according to any one of claims 1 to 5, wherein
the sensor portion (10) includes:

a dielectric layer (11) made of a polymer;
a front-side sheet member (20) placed on a front side of the dielectric layer (11), and including a front-side substrate (21) with the ability to stretch and contract and a front-side electrode (01X to 08X) that is placed on a back surface of the front-side substrate (21), which is on the dielectric layer side, and that contains an elastomer and conductive carbon powder; and
a back-side sheet member (30) placed on a back side of the dielectric layer (11), and including a back-side substrate (31) with the ability to stretch and contract and a back-side electrode (01Y to 08Y) that is placed on a front surface of the back-side substrate (31), which is on the dielectric layer side, and that contains an elastomer and conductive carbon powder,
the sensor portion (10) is capable of detecting a load based on a change in capacitance of a detection portion (A0101 to A0808) formed between the front-side electrode (01X to 08X) and the back-side electrode (01Y to 08Y) facing each other with the dielectric layer (11) interposed therebetween,
the wiring portion includes a front-side wiring portion (01x to 08x) placed on the back surface of the front-side substrate (21) and connected to the front-side electrode (01X to 08X), and a back-side wiring portion (01y to 08y) placed on the front surface of the back-side substrate (31) and connected to the back-side electrode (01Y to 08Y),
the first conductive layer (32) of the front-side wiring portion (01x to 08x) is formed so as to be continuous with the front-side electrode (01X to 08X), and the first conductive layer (32) of the back-side wiring portion (01y to 08y) is formed so as to be continuous with the back-side electrode (01Y to 08Y).

## Patentansprüche

1. Lastsensor (1), umfassend:

einen dehnbaren und zusammenziehbaren Sensorteil (10) zum Erfassen einer Last; und
einen Verdrahtungsteil, verbunden mit dem Sensorteil (10), wobei der Verdrahtungsteil einschließt:

eine erste leitfähige Schicht (32), gedruckt auf einer Oberfläche eines Substrats mit der Fähigkeit sich zu dehnen und sich zusammenzuziehen und enthaltend ein Elastomer und leitfähiges Kohlenstoffpulver,
**dadurch gekennzeichnet, dass** der Lastsensor (1) weiter
eine zweite leitfähige Schicht (33), gedruckt auf der ersten leitfähigen Schicht (32), aufweisend eine Fläche, die kleiner ist als diejenige der ersten leitfähigen Schicht (32), und enthaltend ein Elastomer und Metallpulver, umfasst.

2. Lastsensor (1) nach Anspruch 1, wobei
ein Abschnitt der zweiten leitfähigen Schicht (33) in der ersten leitfähigen Schicht (32) in dem Verdrahtungsteil eingebettet ist.

3. Lastsensor (1) nach Anspruch 1, wobei
der Verdrahtungsteil durch Aufbringen eines ersten Leitlacks (321) zum Bilden der ersten leitfähigen Schicht (32) auf die Oberfläche des Substrats und Aufbringen eines zweiten Leitlacks (331) zum Bilden der zweiten leitfähigen Schicht (33) auf eine Oberfläche des ersten Leitlacks (321) in einem halbgehärteten Zustand gebildet ist.

4. Lastsensor (1) nach einem der Ansprüche 1 bis 3, wobei
der Verdrahtungsteil eine Schutzschicht (34), welche die erste leitfähige Schicht (32) und die zweite leitfähige Schicht (33) bedeckt, einschließt.

5. Lastsensor (1) nach einem der Ansprüche 1 bis 4, wobei der Verdrahtungsteil ein Verbindungsende (200x, 300y), um elektrisch mit einem Messkreis verbunden zu sein, einschließt und das Verbindungsende (200x, 300y) eine Verstärkungsschicht (35), angeordnet auf der ersten leitfähigen Schicht (32), um die zweite leitfähige Schicht (33) zu bedecken, und enthaltend ein Harz und leitfähiges Kohlenstoffpulver, einschließt.

6. Lastsensor (1) nach einem der Ansprüche 1 bis 5, wobei der Sensorteil (10) einschließt:

eine dielektrische Schicht (11) aus einem Polymer;
ein vorderseitiges Blattelement (20), platziert auf einer Vorderseite der dielektrischen Schicht (11), und einschließend ein vorderseitiges Substrat (21) mit der Fähigkeit sich zu dehnen und sich zusammenzuziehen und eine vorderseitige Elektrode (01X bis 08X), die auf einer rückwärtigen Oberfläche des vorderseitigen Substrats (21), welche sich auf der Seite der dielektrischen Schicht befindet, platziert ist und die ein Elastomer und leitfähiges Kohlenstoffpulver enthält; und
ein rückseitiges Blattelement (30), platziert auf einer Rückseite der dielektrischen Schicht (11), und einschließend ein rückseitiges Substrat (31) mit der Fähigkeit sich zu dehnen und sich zusammenzuziehen und eine rückseitige Elektrode (01Y bis 08Y), die auf einer vorderen Oberfläche des rückseitigen Substrats (31), welche sich auf der Seite der dielektrischen Schicht befindet, platziert ist und die ein Elastomer und leitfähiges Kohlenstoffpulver enthält,
wobei der Sensorteil (10) imstande ist, auf Grundlage einer Änderung in der Kapazität eines Erfassungsteils (A0101 bis A0808), gebildet zwischen der vorderseitigen Elektrode (01X bis 08X) und der rückseitigen Elektrode (01Y bis 08Y), welche einander mit der dazwischen angeordneten dielektrischen Schicht (11) gegenüberstehen, eine Last zu erfassen,
wobei der Verdrahtungsteil einen vorderseitigen Verdrahtungsteil (01x bis 08x), platziert auf der rückwärtigen Oberfläche des vorderseitigen Substrats (21) und verbunden mit der vorderseitigen Elektrode (01X bis 08X), und einen rückseitigen Verdrahtungsteil (01y bis 08y), platziert auf der vorderen Oberfläche des rückseitigen Substrats (31) und verbunden mit der rückseitigen Elektrode (01Y bis 08Y), einschließt,
wobei die erste leitfähige Schicht (32) des vorderseitigen Verdrahtungsteils (01x bis 08x) derart gebildet ist, um mit der vorderseitigen Elektrode (01X bis 08X) durchgängig zu sein, und
wobei die erste leitfähige Schicht (32) des rückseitigen Verdrahtungsteils (01y bis 08y) derart gebildet ist, um mit der rückseitigen Elektrode (01Y bis 08Y) durchgängig zu sein.

## Revendications

1. Capteur de charge (1), comprenant:

une partie de capteur extensible et susceptible de contraction (10) pour la détection d'une charge; et
une partie câblage raccordée à la partie capteur (10), dans laquelle la partie câblage comprend:

une première couche conductrice (32) imprimée sur une surface d'un substrat pouvant s'étendre et se contracter et contenant un élastomère et de la poudre de carbone conducteur,
**caractérisé en ce que** le capteur de charge (1) comprend en outre
une deuxième couche conductrice (33) imprimée sur la première couche conductrice (32), présentant une zone plus petite que la première couche conductrice (32), et contenant un élastomère et une poudre de métal.

2. Capteur de charge (1) selon la revendication 1, dans lequel une partie de la deuxième couche conductrice (33) est enfouie dans la première couche conductrice (32) dans la partie câblage.

3. Capteur de charge (1) selon la revendication 1, dans lequel la partie câblage est formée en appliquant une première peinture conductrice (321) pour la formation de la première couche conductrice (32) sur une surface du substrat, et en appliquant une deuxième peinture conductrice (331) pour la formation de la deuxième couche conductrice (33) sur la surface de la première peinture conductrice (321) dans un état semi-durci.

4. Capteur de charge (1) selon l'une quelconque des revendications 1 à 3, dans lequel la partie câblage comprend une couche protectrice (34) recouvrant la première couche conductrice (32) et la deuxième couche conductrice (33).

5. Capteur de charge (1) selon l'une quelconque des revendications 1 à 4, dans lequel la partie câblage comprend une extrémité de connexion (200x, 300y) connectable électriquement à un circuit de mesure, et
l'extrémité de connexion (200x, 300y) comprend une couche de renforcement (35) sur la première couche conductrice (32) de manière à recouvrir la deuxième couche conductrice (33) et contenant une résine et une poudre de carbone conducteur.

6. Capteur de charge (1) selon l'une quelconque des revendications 1 à 5, dans lequel la partie capteur (10) comprend:

une couche diélectrique (11) formée d'un polymère;
un élément en feuille côté frontal (20) placé sur le côté frontal de la couche diélectrique (11) et comprenant un substrat côté frontal (21) avec la capacité de s'étendre et de se contracter et une électrode côté frontal (01X to 08X) placée sur une surface arrière du substrat côté frontal (21), qui est sur le côté couche diélectrique et qui contient un élastomère et une poudre de carbone conducteur; et
un élément en feuille arrière (30) placé à l'arrière de la couche diélectrique (11) et comprenant un substrat arrière (31) pouvant s'étendre et se contracter et une électrode arrière (01Y to 08Y) placée sur une surface frontale du substrat arrière (31), qui est sur le côté couche diélectrique et qui contient un élastomère et une poudre de carbone conducteur,
la partie capteur (10) est capable de détecter une charge sur base d'une modification de capacitance d'une partie détection (A0101 à A0808) formée entre l'électrode frontale (A0101 à A0808) et l'électrode arrière (01Y à 08Y) se faisant mutuellement face, la couche diélectrique (11) étant intercalée,
la partie câblage comprend une partie câblage frontale (01X à 08X) placée à la surface arrière du substrat frontal (21) et connectée à l'électrode frontale (01X à 08X) et une partie de câblage arrière (01Y à 08Y) placée sur la surface avant du substrat arrière (31) et connectée à l'électrode arrière (01Y à 08Y),
la première couche conductrice (32) de la partie câblage frontale (01X à 08X) est formée de manière à être continue avec l'électrode frontale (01X à 08X), et la première couche conductrice (32) de la partie câblage arrière (01Y à 08Y) est formée de manière à être continue avec l'électrode arrière (01Y à 08Y).

【FIG. 1】

20 (21)
A0808
08Y
01Y
A0801
30 (31)
II
08X
12
01X
A0108
11
(10)
08y
III
01y
300y
200x
01x
A0101
08x
1
BACKWARD
RIGHT
LEFT
FORWORD
Y direction
X direction

【FIG. 2】

1
20
21
30
31
08Y
11
08X
A0808
01X
A0108
330
08y
33
32
34
UPPER
RIGHT
LEFT
LOWER
X direction

【FIG. 3】

BACKWARD
Y direction
LEFT
RIGHT
X direction
FORWORD
Ⅲ
32
33
31
03y
03Y
32
33
02y
02Y
12
32
330
01y
33
01Y
Ⅳ
Ⅳ
300y
Ⅴ
Ⅴ
11

【FIG. 4】

UPPER
LEFT
RIGHT
X direction
LOWER

34
33
01y
32
320
31

【FIG. 5】

UPPER
LEFT
RIGHT
X direction
LOWER

33
35
01y
32
31

【FIG. 6】

[FIG. 6A]
321
31
UPPER
LOWER
LEFT
RIGHT
[FIG. 6B]
321
320
331
31
UPPER
LOWER
LEFT
RIGHT
[FIG. 6C]
321
341
331
31
UPPER
LOWER
LEFT
RIGHT
[FIG. 6D]
321
351
331
31
UPPER
LOWER
LEFT
RIGHT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011075322 A
- JP 2005317638 A
- JP 2004031641 A
- JP H06194680 B
- JP H06194680 A
- JP 2012163348 A